# EUROPÄISCHE PATENTSCHRIFT

(11) **EP 0 750 136 B1**
(45) Veröffentlichungstag und Bekanntmachung des Hinweises auf die Patenterteilung: **05.04.2000**
(21) Anmeldenummer: 96107932.4
(22) Anmeldetag: 17.05.1996
(51) Int. Cl.: F16H 47/04, B60K 7/00, B60K 17/04

(54) **Hydromechanischer Radantrieb mit Planetengetriebe**
Hydromechanical wheel drive with planetary gearset
Entraînement de roue hydromécanique à train épicycloidal

(30) Priorität: 23.06.1995 DE 19522926
(43) Veröffentlichungstag der Anmeldung: 27.12.1996
(73) Patentinhaber: BRUENINGHAUS HYDROMATIK GMBH, 89275 Elchingen (DE)
(72) Erfinder: Stölzer, Rainer, 89231 Neu-Ulm (DE)
(74) Vertreter: Körber, Wolfhart, Dr. rer.nat.

(56) Entgegenhaltungen:
- EP-A- 0 137 406
- DE-A- 2 101 515
- DE-A- 4 206 087
- DE-B- 1 132 450
- DE-B- 1 140 469

## Beschreibung

Die Erfindung betrifft einen hydromechanischen Radantrieb mit einem Planetengetriebe nach dem Oberbegriff des Anspruches 1.

Ein derartiger Radantrieb ist z.B. aus der DE 42 06 087 A1 bekannt. Bei dem bekannten Radantrieb umschließt eine auf einem Nabenträger drehbar gelagerte Nabe einen Hohlraum, in dem eine Axialkolbenmaschine in Schrägscheibenbauweise und ein nachgeschaltetes zweistufiges Planetengetriebe zum Antrieb der Nabe angeordnet sind. Die Schrägscheibe der Axialkolbenmaschine ist mit dem feststehenden Nabenträger drehfest verbunden und die rotierende Zylindertrommel treibt das Sonnenrad der ersten Stufe des Planetengetriebes unmittelbar an. Das zweistufige Planetengetriebe gewährleistet das notwendige Untersetzungsverhältnis für den Antrieb der Räder.

Aus der DE 11 40 469 B und der DE 11 32 450 B ist darüberhinaus bekannt, bei einem Planetengetriebe für einen Radantrieb neben dem Sonnenrad auch das Hohlrad und unmittelbar die Radnabe anzutreiben. Die Planetenräder sind dabei auf Stegen gelagert, die mit der Nabe fest verbunden sind. Ein unmittelbarer Antrieb der Planetenräder ist jedoch nicht vorgesehen. Durch den sich einstellenden Überlagerungseffekt beim gleichzeitigen Antrieb des Hohlrades und Sonnenrades wird eine stufenlose Variation des Übersetzungsverhältnisses erzielt.

Gegenüber dem gattungsbildenden, aus der DE 42 06 087 A1 bekannten Stand der Technik liegt der vorliegenden Erfindung die Aufgabe zugrunde, den Drehzahlbereich des Antriebe und den zur Verfügung stehenden Bereich des Antriebs- und Bremsmomentes weiter zu erhöhen.

Die Aufgabe wird durch die kennzeichnenden Merkmale des Anspruches 1 in Verbindung mit den gattungsbildenden Merkmalen gelöst.

Der Erfindung liegt die Erkenntnis zugrunde, neben einem hydrostatischen Antrieb für das Sonnenrad der ersten Stufe des Planetengetriebes einen weiteren Antrieb für die Planetenräder des Planetengetriebes durch weitere Axialkolbenmaschinen vorzusehen. Durch die von den zuschaltbaren die Planetenräder treibenden zusätzlichen hydrostatischen Antriebsmaschinen wird ein zusätzliches Drehmoment erzeugt, das das insgesamt wirksame Drehmoment des erfindungsgemäßen Radantriebes erheblich vergrößert. Dadurch kann das insgesamt wirksam werdende Drehmoment des Antriebs auch bei konstantem Öldruck und festem Neigungswinkel der Schrägscheiben durch Zu- und Abschalten der einzelnen Axialkolbenmaschinen stufenweise verändert werden. In gleicher Weise kann auch neben dem Drehmoment die Drehzahl der anzutreibenden Nabe durch Zu- und Abschalten einzelner Axialkolbenmaschinen stufenweise variiert werden.

Die Axialkolbenmaschinen können vorteilhaft in Schrägscheibenbauweise nach Anspruch 2 ausgebildet sein, wobei die Schrägscheibe der das Sonnenrad antreibenden Axialkolbenmaschine vorzugsweise über einen Zuganker nach Anspruch 3 mit dem Nabenträger drehfest verbunden sein kann.

Die Zylindertrommeln der Axialkolbenmaschinen können mit dem Sonnenrad bzw. jeweils mit den Planetenrädern nach Anspruch 4 eine Einheit bilden und in einem äußeren Umfangsbereich eine geeignete Verzahnung aufweisen. Sämtliche Axialkolbenmaschinen und das Planetengetriebe können nach Anspruch 5 in einer kompakten Bauweise von dem Nabenträger und der Nabe umschlossen werden.

Wenn das Planetengetriebe entsprechend den Ansprüchen 6 bis 8 zweistufig ausgebildet ist, kann das Sonnenrad der zweiten Stufe durch die Planetenräder der ersten Stufe mittels axial versetzter Treibräder unmittelbar angetrieben werden.

Weiterhin kann der Radantrieb gemäß Anspruch 10 mit einer Bremsvorrichtung versehen sein, die vorzugsweise nach Anspruch 11 aus miteinander in Wirkverbindung stehenden Bremslamellen und feststehenden Gegenlamellen bestehen kann.

Nachstehend ist die Erfindung anhand eines Ausführungsbeispiels unter Bezugnahme auf die Zeichnung näher beschrieben. Es zeigen:
Fig. 1 einen Axialschnitt durch ein Ausführungsbeispiel des erfindungsgemäßen Radantriebs,
Fig. 2 einen Schnitt entlang der Linie B-B in Fig. 1,
Fig. 3 einen Schnitt teilweise entlang der Linie C-C in Fig. 1,
Fig. 4 eine schematische Darstellung des Getriebes in Fig. 1.

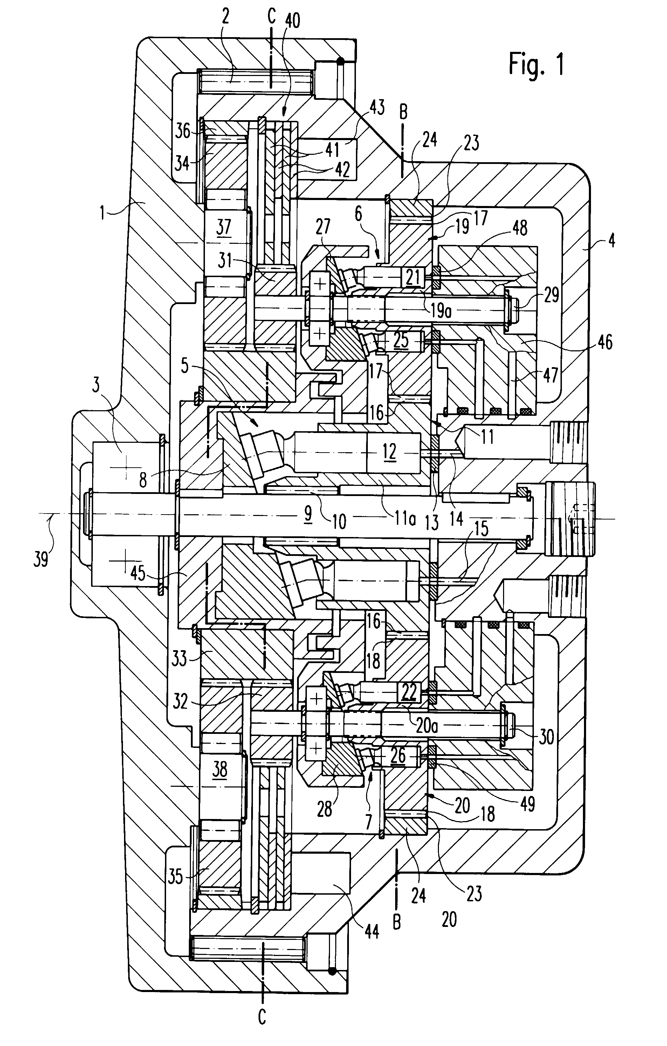

Figur 1 zeigt einen axialen Schnitt durch ein Ausführungsbeispiel des erfindungsgemäßen Radantriebes. Eine Nabe 1, an der die nicht dargestellte Felge des anzutreibenden Rades befestigbar ist, ist über ein Wälzlager 2 und ein weiteres Lager 3 an einem Nabenträger 4 drehbar gelagert. Der Nabenträger 4 ist an der nicht dargestellten Fahrzeugachse befestigbar. Die Nabe 1 und der Nabenträger 4 umschließen eine allgemein mit dem Bezugszeichen 5 versehene erste Axialkolbenmaschine und allgemein mit dem Bezugszeichen 6 und 7 bezeichnete weitere Axialkolbenmaschinen sowie ein im dargestellten Ausführungsbeispiel zweistufig ausgebildetes Planetengetriebe. Die Axialkolbenmaschinen sind in Schrägscheibenbauweise ausgeführt. Die Schrägscheibe 8 der ersten Axialkolbenmaschine 5 ist über einen Zuganker 9 mit dem Nabenträger 4 drehfest verbunden. Eine mittels eines Wälzlagers 10 an dem Zuganker 9 drehbar gelagerte Zylindertrommel 11a der ersten Axialkolbenmaschine 5 nimmt in bekannter Weise die Arbeitszylinder 12 der ersten Axialkolbenmaschine 5 auf und ist in bekannter Weise über eine Steuerfläche 13 mit Druckmittelkanälen 14 und 15 verbunden.

Die Zylindertrommel 11a der ersten Axialkolbenmaschine 5 bildet gleichzeitig ein erstes Sonnenrad 11 einer ersten Stufe des Planetengetriebes. An ihrem äußeren Umfangsbereich weist die Zylindertrommel 11a eine Verzahnung 16 auf, die in eine Verzahnung 17 und 18 am äußeren Umfangsbereich der Zylindertrommeln 19a und 20a der Axialkolbenmaschinen 6 und 7 kämmend eingreift. Die Zylindertrommeln 19a und 20a nehmen die Arbeitszylinder 21 und 22 der Axialkolbenmaschinen 6 und 7 auf und bilden gleichzeitig die Planetenräder 19 und 20 der ersten Stufe des Planetengetriebes. Die als Planetenräder 19, 20 wirksamen Zylindertrommeln 19a und 20a kreisen um die als Sonnenrad 11 wirksame rotierende Zylindertrommel 11a der ersten Axialkolbenmaschine 5.

Desweiteren greifen die Verzahnungen 17 und 18 in eine am Innenumfang angeordnete Verzahnung 23 eines ersten Hohlrades 24 des Planetengetriebes kämmend ein, so daß die als Planetenräder 19, 20 wirksamen Zylindertrommeln 19a und 20a in dem ersten Hohlrad 24 abrollen. Das erste Hohlrad 24 ist mit dem Nabenträger 4 drehfest verbunden.

Die in den Arbeitszylindern 21 und 22 beweglichen Kolben 25 und 26 der Axialkolbenmaschinen 6 und 7 stützen sich an Schrägscheiben 27 und 28 ab. Die Schrägscheiben 27, 28 sind im dargestellten Ausführungsbeispiel über einen Schrägscheibenträger 45 und den Zuganker 9 mit dem Nabenträger 4 drehfest verbunden. Die Zylindertrommeln 19a und 20a sind über Planetenwellen 29 und 30 drehfest mit Treibrädern 31 und 32 verbunden. Die Planetenwellen 29, 30 können in einem Lagerblock 46 gelagert sein, in dem auch die Druckleitungen 47 zu den Steuerflächen 48 und 49 der Axialkolbenmaschinen 6 und 7 geführt sein können. Die Verzahnungen der Treibräder 31 und 32 kämmen mit einer Verzahnung an dem Außenumfang eines zweiten Sonnenrades 33 einer zweiten Stufe des Planetengetriebes. Zweite Planetenräder 34 und 35 der zweiten Stufe des Planetengetriebes stehen ihrerseits im Eingriff mit dem zweiten Sonnenrad 33 und mit einem mit dem Nabenträger 4 drehfest verbundenen zweiten Hohlrad 36. Beim Antrieb des Planetengetriebes kreisen die zweiten Planetenräder 34 und 35 um das zweite Sonnenrad 33 und rollen in dem zweiten Hohlrad 36 ab. Da die Planetenräder 34 und 35 in an der Nabe 1 angeformten Stegen 37, 38 gelagert sind, rotiert beim Antrieb des Planetengetriebes die Nabe 1 um die Rotationsachse 39.

Erfindungsgemäß kann das Planetengetriebe entweder an dem Sonnenrad 11 der ersten Stufe des Planetengetriebes mittels der ersten Axialkolbenmaschine 5 oder alternativ oder zusätzlich an den Planetenrädern 19, 20 der ersten Stufe des Planetengetriebes mittels der Axialkolbenmaschinen 6 und 7 angetrieben werden. Dabei kann das insgesamt resultierende Drehmoment der erfindungsgemäßen Antriebsanordnung auch bei konstantem Neigungswinkel der Schrägscheiben 8, 27, 28 und konstantem Arbeitsdruck stufenweise dadurch variiert werden, daß einzelne Axialkolbenmaschinen 5, 6, 7 zu- oder abgeschaltet werden. In gleicher Weise kann durch Zu- bzw. Abschalten einzelner Axialkolbenmaschinen der Drehzahlbereich variiert werden. Weiter ist zu berücksichtigen, daß die Zylindertrommel der Axialkolbenmaschinen 6 und 7 ein geringeres Untersetzungsverhältnis in Bezug auf die Nabe 1 aufweisen, als die Zylindertrommel 11 der Axialkolbenmaschine 5. Daher kann durch Umschalten von der das Sonnenrad 11 antreibenden Axialkolbenmaschine 5 auf die die Planetenräder 19, 20 antreibenden Axialkolbenmaschinen 6 und 7 auch das Untersetzungsverhältnis des Getriebes in gewissen Grenzen variiert werden, was insbesondere beim Übergang von einem Arbeitsbetrieb mit hoher Zugkraft auf einen Schnellfahrbetrieb von wesentlichem Vorteil ist.

Beim Bremsbetrieb, insbesondere im Schiebebetrieb bergab, können die Axialkolbenmaschinen 5, 6 und 7 als Hydropumpen arbeiten und über ein Fahrbremsventil den notwendigen Bremsschub erzeugen. Durch das Zu- bzw. Abschalten einzelner Axialkolbenmaschinen 5, 6, 7 kann das insgesamt wirksame Hubvolumen den Verhältnissen der Fahrstrecke entsprechend angepaßt werden, so daß der Radantrieb über einen großen Bremsmomentbereich verfügt.

Darüberhinaus ist es vorteilhaft, wenn der Radantrieb über eine zusätzliche Bremsvorrichtung verfügt. Im in Fig. 1 dargestellten Ausführungsbeispiel ist daher eine allgemein mit den Bezugszeichen 40 versehene Lamellenbremse 40 vorgesehen, die durch die Treibräder 31 und 32 in Rotation versetzte Bremslamellen 41 sowie feststehende, mit dem Nabenträger 4 verbundene Gegenlamellen 42 aufweist. Die Bremslamellen 41 sind axial verschiebbar und können durch nicht dargestellte, in den Sackbohrungen 43 und 44 angeordnete Bremskolben so beaufschlagt werden, daß sie gegen die Gegenlamellen 42 gedrückt werden.

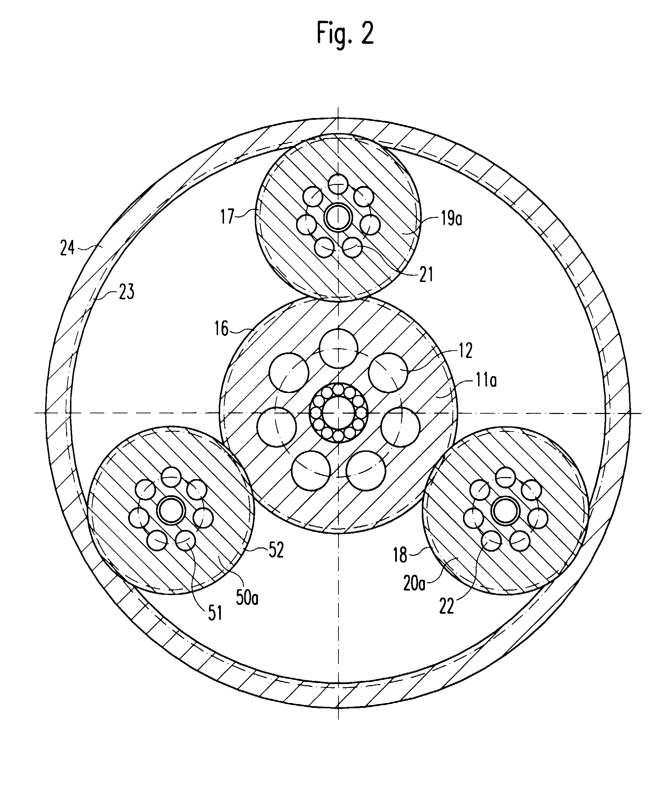

Figur 2 zeigt einen Schnitt entlang der Linie B-B in Figur 1. In dieser Schnittdarstellung ist die erste Stufe des zweistufig ausgebildeten Planetengetriebes mit der als Sonnenrad wirkenden Zylindertrommel 11a der Axialkolbenmaschine 5, den als Planetenräder wirkenden Zylindertrommeln 19a, 20a, 50a und dem Hohlrad 24. In der Zylindertrommel 11a sind die Arbeitszylinder 12 erkennbar, während in der Zylindertrommel 19a bzw. 20a oder 50a die Arbeitszylinder 21 bzw. 22 oder 51 sichtbar sind. Desweiteren sind die Verzahnungen 16, 17, 18, 52 und 23 der Zylindertrommeln 11a, 19a, 20a und 50a sowie des Hohlrades 24 eingezeichnet.

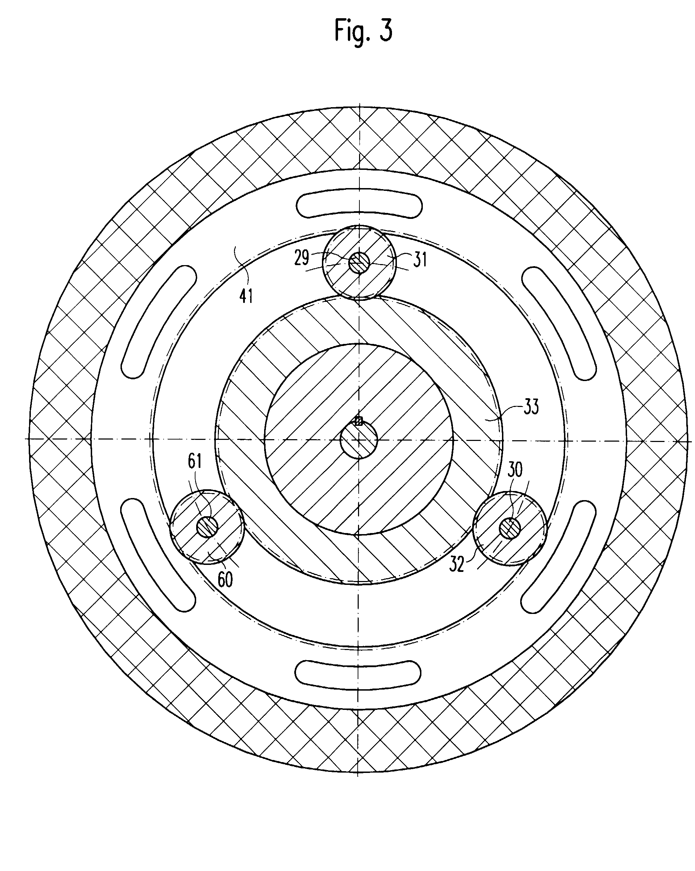

Figur 3 zeigt einige Bauteile in einem weiteren Schnitt entlang der Linie C-C in Figur 1. In dieser Schnittdarstellung ist das zweite Sonnenrad 33, die Treibräder 31, 32 und 60 sowie eine Bremslamelle 41 und die entsprechenden Verzahnungen erkennbar. Die Treibräder 31, 32 und 60 sind auf den Planetenwellen 29, 30 und 61 angeordnet.

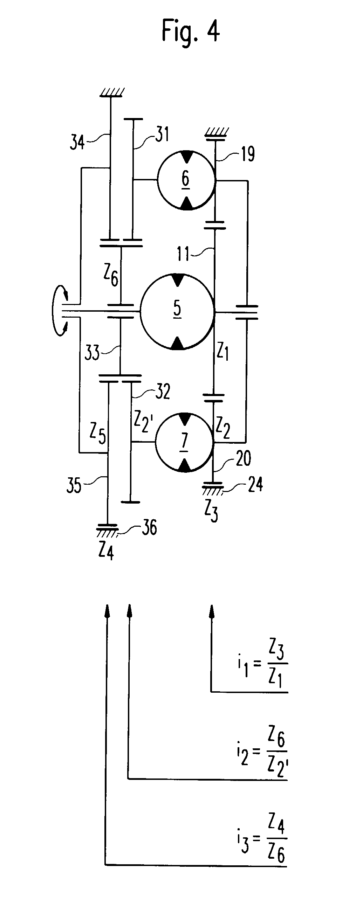

Figur 4 zeigt eine schematische Darstellung des erfindungsgemäßen Radantriebes gemäß dem anhand der Figuren 1 bis 3 beschriebenen Ausführungsbeispiel. Die Zylindertrommel der Axialkolbenmaschine 5 ist, wie bereits beschrieben, als Sonnenrad 11 einer ersten Stufe des Planetengetriebes wirksam, während die Zylindertrommeln der Axialkolbenmaschinen 6 und 7 als Planetenräder 19 und 20 der ersten Stufe des Planetengetriebes wirksam sind und in einem Hohlrad 24 abrollen. Das Untersetzungsverhältnis i₁ ergibt sich aus dem Quotienten des Radius z₃ des Hohlrades 24 mit dem Radius z₁ des Sonnenrades 11. Die Planetenräder 19 und 20 sind mit den Treibrädern 31 und 32 verbunden. Die Treibräder 31 und 32 greifen in das zweite Sonnenrad 33 ein. Die Planetenräder 34 und 35 der zweiten Stufe des Planetengetriebes stehen mit dem zweiten Sonnenrad 33 in Eingriff und rollen in dem zweiten Hohlrad 36 ab. Die resultierende Untersetzung des Getriebes ergibt sich durch Multiplikation der Teiluntersetzungen i₁, i₂ und i₃, wobei i₂ der Quotient aus dem Radius z₆ des zweiten Sonnenrades 33 und dem Radius z'₂ der Treibräder 31 und 32 und i₃ der Quotient aus dem Radius z₄ des zweiten Hohlrades 36 und dem Radius z₆ des Radius des zweiten Sonnenrades 33 ist.

Die vorliegende Erfindung ist auf das vorstehend beschriebene Ausführungsbeispiel nicht beschränkt. So können z.B. die Schrägscheiben der einzelnen Axialkolbenmaschinen 5, 6 und 7 in ihrem Neigungswinkel variabel sein. Desweiteren können grundsätzlich auch Taumelscheibenmaschinen zum Einsatz kommen.

## Patentansprüche

1. Hydromechanischer Radantrieb, umfassend
einen feststehenden Nabenträger (4), eine auf dem Nabenträger (4) drehbar gelagerten Nabe (1) und
eine erste hydrostatische Axialkolbenmaschine (5) zum Antrieb der Nabe (1) über ein zumindest einstufiges Planetengetriebe mit einem von der ersten hydrostatischen Axialkolbenmaschine (5) angetriebenen ersten Sonnenrad (11), mehreren mit dem ersten Sonnenrad (11) in Eingriff stehende und um dieses kreisende erste Planetenräder (19, 20) und einem mit den ersten Planetenrädern (19, 20) in Eingriff stehenden ersten Hohlrad (24), in welchem die ersten Planetenräder (19, 20) abrollen,
**gekennzeichnet durch**
zumindest eine weitere hydrostatische Axialkolbenmaschine (6, 7), die zumindest eines der ersten Planetenräder (19, 20) des Planetengetriebes unmittelbar antreibt.

2. Hydromechanischer Radantrieb nach Anspruch 1,
**dadurch gekennzeichnet,**
daß die Axialkolbenmaschinen (5, 6, 7) in Schrägscheibenbauweise ausgebildet sind, wobei die Schrägscheiben (8, 27, 28) der Axialkolbenmaschinen (5, 6, 7) mit dem Nabenträger (4), die Zylindertrommel (11a) der ersten Axialkolbenmaschine (5) mit dem ersten Sonnenrad (11) und die Zylindertrommeln (19a, 20a) der weiteren Axialkolbenmaschinen (6, 7) mit den ersten Planetenrädern (19, 20) jeweils drehfest verbunden sind.

3. Hydromechanischer Radantrieb nach Anspruch 2,
**dadurch gekennzeichnet,**
daß die drehfeste Verbindung zwischen der Schrägscheibe (8) der ersten Axialkolbenmaschine (5) mit dem Nabenträger (4) durch einen koaxial zur Drehachse (39) der Nabe (1) angeordneten Zuganker (9) gebildet ist.

4. Hydromechanischer Radantrieb nach Anspruch 2 oder 3,
**dadurch gekennzeichnet,**
daß die Zylindertrommel (11a) der ersten Axialkolbenmaschine (5) mit dem ersten Sonnenrad (11) eine Einheit bildet und an einem äußeren Umfangsbereich eine Verzahnung (16) aufweist und
daß die Zylindertrommeln (19a, 20a) der weiteren Axialkolbenmaschinen (6, 7) mit den ersten Planetenrädern (19, 20) eine Einheit bilden und an einem äußeren Umfangsbereich jeweils eine Verzahnung (17, 18) aufweisen, die mit der Verzahnung der das erste Sonnenrad (11) bildenden Zylindertrommel (11a) der ersten Axialkolbenmaschine (5) und einer Verzahnung (23) an der Innenseite des ersten Hohlrades (23) kämmen.

5. Hydromechanischer Radantrieb nach einem der Ansprüche 1 bis 4,
**dadurch gekennzeichnet,**
daß die Axialkolbenmaschinen (5, 6, 7) und das Planetengetriebe innerhalb eines von dem Nabenträger (4) und der Nabe (1) umschlossenen Hohlraums angeordnet sind.

6. Hydromechanischer Radantrieb nach einem der Ansprüche 1 bis 5,
**dadurch gekennzeichnet,**
daß das Planetengetriebe zweistufig ausgebildet ist.

7. Hydromechanischer Radantrieb nach Anspruch 6,
**dadurch gekennzeichnet,**
daß die zweite Stufe des Planetengetriebes ein von den ersten Planetenrädern (19, 20) der ersten Stufe des Planetengetriebes angetriebenes zweites Sonnenrad (33), mehrere mit dem zweiten Sonnenrad (33) in Eingriff stehende und um dieses kreisende zweite Planetenräder (34, 35) und ein mit den zweiten Planetenrädern (34, 35) in Eingriff stehendes zweites Hohlrad (36) aufweist, in welchem die zweiten Planetenräder (34, 35) abrollen.

8. Hydromechanischer Radantrieb nach Anspruch 7,
**dadurch gekennzeichnet,**
daß die zweiten Planetenräder (34, 35) auf mit der Nabe (1) verbundenen Stegen (37, 38) gelagert sind und die Hohlräder (24, 36) mit dem Nabenträger (4) drehfest verbunden sind.

9. Hydromechanischer Radantrieb nach Anspruch 7 oder 8,
**dadurch gekennzeichnet,**
daß die ersten Planetenräder (19, 20) jeweils mit axial versetzten Treibrädern (31, 32) verbunden sind, die mit dem zweiten Sonnenrad (33) in Eingriff stehen.

10. Hydromechanischer Radantrieb nach einem der Ansprüche 1 bis 9,
**dadurch gekennzeichnet,**
daß der Radantrieb eine Bremsvorrichtung (40) umfaßt.

11. Hydromechanischer Radantrieb nach Anspruch 10,
**dadurch gekennzeichnet,**
daß die Bremsvorrichtung (40) zumindest eine von dem Planetengetriebe angetriebene Bremslamelle (41) aufweist, die mit einer mit dem Nabenträger (4) verbundenen Gegenlamelle (42) in Wirkverbindung steht.

12. Hydromechanischer Radantrieb nach Anspruch 11, soweit auf Anspruch 9 rückbezogen,
**dadurch gekennzeichnet,**
daß die mit den ersten Planetenrädern (19, 20) verbundenen Treibräder (31, 32) desweiteren mit der zumindest einen Bremslamelle (41) in Eingriff stehen.

## Claims

1. Hydromechanical wheel drive, comprising
a fixed hub carrier (4), a hub (1) rotatably supported on the hub carrier (4) and
a first hydrostatic axial piston engine (5) for driving the hub (1) via an at least single-stage planetary gear having a first sun wheel (11) driven by the first hydrostatic axial piston engine (5), a plurality of first planet wheels (19, 20) in mesh with and orbiting the first sun wheel (11), and a first ring gear (24), which is in mesh with the first planet wheels (19, 20) and in which the first planet wheels (19, 20) roll,
**characterized by**
at least one further hydrostatic axial piston engine (6, 7) which directly drives at least one of the first planet wheels (19, 20) of the planetary gear.

2. Hydromechanical wheel drive according to claim 1,
**characterized in**
that the axial piston engines (5, 6, 7) are of a swash-plate design, wherein the swash plates (8, 27, 28) of the axial piston engines (5, 6, 7) are connected to the hub carrier (4), the cylinder drum (11a) of the first axial piston engine (5) is connected to the first sun wheel (11) and the cylinder drums (19a, 20a) of the further axial piston engines (6, 7) are connected to the first planet wheels (19, 20), in each case in a non-rotatable manner.

3. Hydromechanical wheel drive according to claim 2,
**characterized in**
that the non-rotatable connection between the swash plate (8) of the first axial piston engine (5) and the hub carrier (4) is formed by a tie rod (9) disposed coaxially with the axis of rotation (39) of the hub (1).

4. Hydromechanical wheel drive according to claim 2 or 3,
**characterized in**
that the cylinder drum (lla) of the first axial piston engine (5) together with the first sun wheel (11) forms a unit and has a gearing (16) at an outer peripheral region and
that the cylinder drums (19a, 20a) of the further axial piston engines (6, 7) together with the first planet wheels (19, 20) form a unit and on an outer peripheral region have in each case a gearing (17, 18), which gearings mesh with the gearing of the cylinder drum (11a) forming the first sun wheel (11) of the first axial piston engine (5) and with a gearing (23) at the inside of the first ring gear (23).

5. Hydromechanical wheel drive according to one of claims 1 to 4,
**characterized in**
that the axial piston engines (5, 6, 7) and the planetary gear are disposed inside a cavity enclosed by the hub carrier (4) and the hub (1).

6. Hydromechanical wheel drive according to one of claims 1 to 5,
**characterized in**
that the planetary gear is of a two-stage design.

7. Hydromechanical wheel drive according to claim 6,
**characterized in**
that the second stage of the planetary gear comprises a second sun wheel (33) driven by the first planet wheels (19, 20) of the first stage of the planetary gear, a plurality of second planet wheels (34, 35) in mesh with and orbiting the second sun wheel (33), and a second ring gear (36), which is in mesh with the second planet wheels (34, 35) and in which the second planet wheels (34, 35) roll.

8. Hydromechanical wheel drive according to claim 7,
**characterized in**
that the second planet wheels (34, 35) are supported on webs (37, 38) connected to the hub (1) and the ring gears (24, 36) are non-rotatably connected to the hub carrier (4).

9. Hydromechanical wheel drive according to claim 7 or 8,
**characterized in**
that the first planet wheels (19, 20) are connected in each case to axially offset driving wheels (31, 32), which are in mesh with the second sun wheel (33).

10. Hydromechanical wheel drive according to one of claims 1 to 9,
**characterized in**
that the wheel drive comprises a braking device (40).

11. Hydromechanical wheel drive according to claim 10,
**characterized in**
that the braking device (40) comprises at least one brake disc (41), which is driven by the planetary gear and is operationally connected to a counterpart disc (42) connected to the hub carrier (4).

12. Hydromechanical wheel drive according to claim 11, in so far as related to claim 9,
**characterized in**
that the driving wheels (31, 32) connected to the first planet wheels (19, 20) are moreover in mesh with the at least one brake disc (41).

## Revendications

1. Dispositif d'entraînement hydromécanique de roue, comprenant
un porte-moyeu fixe (4), un moyeu (1) monté de manière à pouvoir tourner sur le porte-moyeu (4), et
une première machine hydrostatique à piston axial (5) pour l'entraînement du moyeu (1) par l'intermédiaire d'un engrenage planétaire au moins à un étage, comportant une première roue planétaire (11) qui est entraînée par la première machine hydrostatique à piston axial (5), plusieurs premiers pignons satellites (19,20), qui engrènent avec la première roue planétaire (11) et tournent autour de cette dernière, et une première couronne dentée intérieure (24) qui engrène avec les premiers pignons satellites (19,20) et dans laquelle roulent les premiers pignons satellites (19,20), caractérisé par
au moins une autre machine hydrostatique à piston axial (6,7), qui entraîne directement au moins l'un des premiers pignons satellites (19,20) de l'engrenage planétaire.

2. Dispositif d'entraînement hydromécanique de roue selon la revendication 1, caractérisé en ce
que les machines à piston axial (5,6,7) sont agencées selon une réalisation à disques obliques, les disques obliques (8,27,28) des machines à piston axial (5,6,7) étant reliés respectivement solidairement en rotation au porte-moyeu (4), et le tambour cylindrique (lla) de la première machine à piston axial (5) étant relié solidairement en rotation avec la première roue planétaire (11), et les tambours cylindriques (19a,20a) des autres machines à piston axial (6) étant reliés solidairement en rotation aux premières roues planétaires (19,20).

3. Dispositif d'entraînement hydromécanique de roue selon la revendication 2, caractérisé en ce
que la liaison solidaire en rotation entre le disque oblique (8) de la première machine à piston axial (5) et le porte-moyeu (4) est formée par un tirant (9) disposé coaxialement par rapport à l'axe de rotation (39) du moyeu (1).

4. Dispositif d'entraînement hydromécanique de roue selon la revendication 2 ou 3, caractérisé en ce
que le tambour cylindrique (11a) de la première machine à piston axial (5) forme avec la première roue planétaire (11) une unité et comporte une denture (16) sur une partie périphérique extérieure, et
que les tambours cylindriques (19a,20a) de l'autre machine à piston axial (6,7) forment avec les premiers pignons satellites (19,20) d'une unité et comportent, sur une partie circonférentielle extérieure des dentures respectives (17,18), qui engrènent avec la denture du tambour cylindrique (11a) formant la première roue planétaire (11), de la première machine à piston axial (5) et avec une denture (23) située sur le côté intérieur de la première couronne à denture intérieure (23).

5. Dispositif d'entraînement hydromécanique de roue selon l'une des revendications 1 à 4, caractérisé en ce
que les machines à piston axial (5,6,7) et l'engrenage planétaire sont disposés à l'intérieur d'une cavité entourée par le porte-moyeu (4) et le moyeu (1).

6. Dispositif d'entraînement hydromécanique de roue selon l'une des revendications 1 à 5, caractérisé en ce
que l'engrenage planétaire est réalisé à deux étages.

7. Dispositif d'entraînement hydromécanique de roue selon la revendication 6, caractérisé en ce
que le second étage de l'engrenage planétaire possède une seconde roue planétaire (33) qui est entraînée par les premiers pignons satellites (19,20) du premier étage de l'engrenage planétaire, plusieurs seconds pignons satellites (34,35) qui engrènent avec la seconde roue planétaire (33) et tournent autour de cette roue planétaire, et une seconde couronne à denture intérieure (36) qui engrène avec les seconds pignons satellites (34,35) et dans laquelle roulent les seconds pignons satellites (34,35).

8. Dispositif d'entraînement hydromécanique de roue selon la revendication 7, caractérisé en ce
que les seconds pignons satellites ,(34,35) sont tourillonnés sur des barrettes (37,38) reliées au moyeu (1), et que les couronnes à denture intérieure (24,36) sont reliées solidairement en rotation au porte-moyeu (4).

9. Dispositif d'entraînement hydromécanique de roue selon la revendication 7 ou 8, caractérisé en ce
que les premiers pignons satellites (19,20) sont reliés respectivement à des pignons d'entraînement (31,32) décalés axialement, qui engrènent avec la seconde roue planétaire (33).

10. Dispositif d'entraînement hydromécanique de roue selon l'une des revendications 1 à 9, caractérisé en ce
que le dispositif d'entraînement de roues comprend un dispositif de freinage (40).

11. Dispositif d'entraînement hydromécanique de roue selon la revendication 10, caractérisé en ce
que le dispositif de freinage comporte au moins une lamelle de frein (41) entraînée par l'engrenage planétaire et qui coopère avec une lamelle antagoniste (42) reliée au porte-moyeu (4).

12. Dispositif d'entraînement hydromécanique de roue selon la revendication 11, dans la mesure où elle est rapportée à la revendication 9, caractérisé en ce
que les roues d'entraînement (31,32), qui sont reliées aux premiers pignons satellites (19,20), engrènent par ailleurs avec la au moins une lamelle de frein (41).
